**Europäisches Patentamt**

**European Patent Office**

**Office européen des brevets**

(19)

(11) Veröffentlichungsnummer : **0 342 698 B1**

(12)

# EUROPÄISCHE PATENTSCHRIFT

(45) Veröffentlichungstag der Patentschrift :
**12.08.92 Patentblatt 92/33**

(51) Int. Cl.$^5$ : **B23H 7/16**

(21) Anmeldenummer : **89109068.0**

(22) Anmeldetag : **19.05.89**

(54) **Verfahren zur gesteuerten Rückzugsbewegung einer Senkelektrode bei einer Elektroerosionsmaschine.**

(30) Priorität : **20.05.88 DE 3817302**

(43) Veröffentlichungstag der Anmeldung :
**23.11.89 Patentblatt 89/47**

(45) Bekanntmachung des Hinweises auf die
Patenterteilung :
**12.08.92 Patentblatt 92/33**

(84) Benannte Vertragsstaaten :
**CH DE FR GB IT LI LU SE**

(56) Entgegenhaltungen :
**US-A- 4 608 476**

(73) Patentinhaber : **AG für industrielle Elektronik
AGIE Losone bei Locarno
CH-6616 Losone/Locarno (CH)**

(72) Erfinder : **Gruber, Hans-Peter
Via Sottociesa 14
CH-6616 Losone (CH)**
Erfinder : **DeMaria, Renzo
Via Monte Gaggio 2
CH-6500 Bellinzona (CH)**
Erfinder : **Robbiani, Fabrizio
Contrada Busi 2
CH-6816 Bissone (CH)**
Erfinder : **Stutz, Edwin
Via Cantonale
CH-6653 Verscio (CH)**

(74) Vertreter : **EGLI-EUROPEAN PATENT
ATTORNEYS
Widenmayerstrasse 5
W-8000 München 22 (DE)**

## Beschreibung

Die Erfindung betrifft ein Verfahren zur gesteuerten Rückzugsbewegung einer Senkelektrode bei einer Elektroerosionsmaschine, bei dem die Senkelektrode bei vorhandenem Kurzschluß zunächst eine vorgegebene Weglänge längs der zuvor durchlaufenenen Bahn von dem Kurzschlußpunkt zu einem Zwischenpunkt zurückbewegt wird, und bei dem die Senkelektrode auf der vorgegebenen Rückzugsbahn von dem Zwischenpukt wegbewegt wird, wenn bei Erreichen des Zwischenpunktes noch ein Kurzschluß vorhanden ist.

In der US-A-4 608 476 ist ein Verfahren zur gesteuerten Rückzugsbewegung einer Senkelektrode bei einer Elektroerosionsmaschine beschrieben, bei dem beim Auftreten eines Kurzschlusses das Werkstück und die Senkelektrode relativ zu einander translatorisch bewegt werden. Dies erfolgt derart, daß eine Bewegung um eine erste vorbestimmte Strecke in einer ersten vorgegebenen Richtung quer zu dem gerade vor der Kurzschlußstelle liegenden Bahnabschnitt der Senkelektrode und gleichzeitig um eine zweite Strecke in einer zweiten vorbestimmten Richtung erfolgt, mit dem Ergebnis, daß sich der Endpunkt der Senkelektrode längs einer schräg verlaufenden Geraden um eine vorbestimmte Strecke von der Bearbeitungsfläche entfernt. Dieser Endpunkt wird also entlang eines Vektors verschoben.

Ein Verfahren zur gesteuerten Rückzugsbewegung einer Senkelektrode bei einer Elektroerosionsmaschine ist aus der DE-A-35 25 683 bekannt. Demgemäß fährt bei Auftreten einnes Kurzschlusses die Senkelektrode zunächst entlang der bisher gefahrenen Bahn um eine vorgegebene, kurze Wegstrecke in der bereits erodierten Bahn zurück.

Ist am Ende dieser ersten Rückzugsbahn der Kurzschluß noch nicht beseitigt, so wird die Elektrode auf einer zweiten, geradlinigen Bahn weiter von dem Kurzschlußpunkt fortbewegt. Diese zweite Bahn wird durch einen Rückzugsvektor beschrieben, der in seiner Richtung flexibel ist und der der Anforderung unterliegt, die Elektrode möglichst schnell vom Kurzschlußpunkt zu entfernen.

Der variable Rückzugsvektor hat insbesondere bei langen erodierten Bahnen geringer Breite, wie beispielsweise zur Herstellung von Dichtungsringen den Nachteil, daß sein Winkel gegenüber der Seitenwandung in Abhängigkeit von der schon erodierten Weglänge immer kleiner wird; die Rückzugsbewegung der Senkelektrode kann dabei nur "schleifend" erfolgen.

Dies bedeutet folglich, daß der Kurzschluß nicht, bzw. nur sehr langsam abgebaut wird.

Aus der der DE-A-37 05 475 ist ein Elektrodenrückführsteuerungssystem für eine elektrische Lichtbogenvorrichtung bekannt, bei der, wenn ein Kurzschlußzustand auftritt, eine Elektrode von einer Stellung in einem Werkstück längs einer Bahn wegbewegt wird, die die Elektrode zur Bearbeitung fortbewegt. Ebenfalls durch diese Druckschrift ist ein System bekannt, bei dem ein Objektpunkt, zu dem die Elektrode direkt nach dem Auftreten des Kurzschlußzustandes bewegt wird, mit Fortschreiten der Bearbeitung fortgeschrieben wird. Dies bedeutet, daß, je tiefer die Elektrode in das Werkstück hineinerodiert, desto tiefer liegt auch der Ort auf der Achse des Werkstückes, zu dem hin sich die Fluchtbewegung der Elektrode vollzieht.

Durch die planetäre Erodierbewegung der Senkelektrode wird eine Bahn im Prinzip nur aufgeweitet; die Senkelektrode erzeugt auf diese Weise nicht direkt die gewünschte Bahn.

Nachteil ist dabei insbesondere, daß die Elektrode bei Auftreten des Kurzschlusses einen derartigen Abtrag im Werkstück erzeugt hat, daß aufgrund der Rundung der Elektrode eine formentsprechende Rundung in dem Werkstück eingeschnitten ist. Dadurch entsteht in dem Werkstück eine kleine Kante, welche beim Rückzug der Senkelektrode jeweils beschädigt wird.

Aufgabe der Erfindung ist es daher, das Verfahren der eingangs genannten Art dahingehend zu verbessern, daß einerseits unnötig große Rückzugsbewegungen vermieden werden und andererseits Kurzschlüsse möglichst schnell beseitigt werden.

Des weiteren soll der Bahnverlauf der Rückzugsbewegung möglichst flexibel der Geometrie des jeweils zu erodierenden Werkstückes und der darin erodierten Bahn angepaßt werden können.

Diese Aufgabe wird bei einem gattungsgemäßen Verfahren erfindungsgemäß dadurch gelöst, daß die Rückzugsbahn durch einen in Betrag und Richtung fest definierten Vektor bestimmt wird, wobei bei noch vorhandenem Kurzschluß an der Spitze des Vektors die weitere Bewegung der Senkelektrode parallel zur erodierten Bahn und in entgegengesetzter Richtung zu der Richtung, die die Senkelektrode in der erodierten Bahn beim Erodieren beschreibt, geführt wird.

Dies hat insbesondere den Vorteil, daß bei einer Bahnerosion die Senkelektrode nach Auftreten des Kurzschlusses so schnell wie möglich die erodierte Bahn verlassen kann, wobei gleichzeitig leicht festgestellt werden kann, in wieweit die Fluchtrichtung durch andere Werkstücksformen begrenzt wird. Dies ist insbesondere dann nötig, wenn der Rückzug der Senkelektrode in relativ komplizierteren geometrischen Gebilden vollführt werden muß, beispielsweise in Werkstücken bei der Herstellung von Dichtringen, wo die Richtung der Bahnerosion starken Änderungen unterworfen sein kann.

Die Aufgabe wird bei einem gattungsgemäßen Verfahren aber auch durch die im Kennzeichen des Anspruches 6 angegebenen Merkmale gelöst.

Dies hat insbesondere den Vorteil, daß unregelmäßig auftretende Hindernisse beispielsweise aufgrund der Form des Werkstücks bei Beschreibung eines Weges der Senkelektrode auf der Rückzugsbahn bei optimaler Bahnausnutzung umgangen werden können.

Bei einem vorteilhaften Verfahren gemäß der Erfindung ist der die Rückzugsbahn bestimmende Vektor in Bezug auf ein absolutes Koordinatensystem fix. Dies hat insbesondere den Vorteil, daß die Rückzugsbahn übersichtlicher mit den jeweils sie begrenzenden Konturen des Werkstücks verglichen werden kann.

Bei einer Ausführungsform des erfindungsgemäßen Verfahrens bestimmen wenigstens zwei nach Betrag und Richtung fest definierte Vektoren die Rückzugsbahn in Abhängigkeit von der Geometrie des Werkstückes, wobei beim Wechsel von dem einen Vektor auf den anderen Vektor bahnmäßig für die zu durchlaufende Rückzugsbahn der Senkelektrode nur die Spitzen der Vektoren miteinander verbunden werden und die weitere Bewegung ansonsten wieder parallel zur erodierten Bahn erfolgt.

Dies hat insbesondere den Vorteil, daß der Rückzugsbahn entgegenstehende Hindernisse nur durch Verkürzung eines übersichtichen Vektors umgangen werden können.

Bei einer vorteilhaften Ausführungsform des erfindungsgemäßen Verfahrens wird die Senkelektrode nach Aufhebung des Kurzschlusses auf der Rückzugsbahn dem Ort am Werkstück wieder zugeführt, an dem der Kurzschluß zuerst aufgetreten ist.

In der erodierten Bahn sedimentieren die beim Erodiervorgang entstandenen Partikel. Verläuft die Bewegung der Senkelektrode nochmalig längs dieser erodierten Bahnkurve, so besteht die Gefahr, daß diese Partikel in die Flanken oder in den Boden der Bahnkurve eingerieben werden und deren erodierten Flächen dadurch zerstören.

Durch die erfindungsgemäße Rückführung wird eine derartige Zerstörung der Oberflächen vermieden.

In einer weiteren vorteilhaften Ausführungsform des Verfarens wird eine Rückzugsbewegung "Punkt" (die einzelnen Rückzugsbewegungen werden anhand der Beschreibung im folgenden näher erläutert) mit der Rückzugsbewegung Default, und in einer weiteren vorteilhaften Ausführungsform des Verfahrens wird die Rückzugsbewegung "Punkt" mit einer weiteren Rückzugsbewegung "Punkt" verbunden.

Bei einer anderen vorteilhaften Ausführungsform des erfindungsgemäßen Verfahrens wird die Rückzugsbewegung "Punkt" mit der Rückzugsbewegung "Vektor" und bei einer anderen vorteilhaften Ausführungsform des Verfahrens wird eine Rückzugsbewegung "Punkt" mit einer Rückzugsbewegung "Planetär" verbunden.

Bei einer anderen vorteilhaften Ausführungsform des Verfahrens wird die Rückzugsbewegung "Vektor" mit der Rückzugsbewegung "Default", bei einer weiteren vorteilhaften Ausführungsform des Verfahrens wird die Rückzugsbewegung "Vektor" mit der Rückzugsbewegung "Vektor" verbunden.

Bei einer weiteren vorteilhaften Ausführungsform des Verfahrens wird die Rückzugsbewegung "Vektor" mit der Rückzugsbewegung "Planetär" verbunden.

In vorteilhafter Weise werden bei einer weiteren Ausführungsform des erfindungsgemäßen Verfahrens miteinander verbundene Rückzugsbewegungen miteinander verbunden.

Bei einer besonders vorteilhaften Ausführungsform des erfindungsgemäßen Verfahrens wird einer üblichen einfachen Timerbewegung der Senkelektrode entlang der jeweiligen Rückzugsbahn eine zusätzliche Doppeltimerbewegung überlagert, wobei in vorteilhafter Ausführungsform die Doppeltimerbewegung länger dauert als die einfache Timerbewegung.

Eine sogenannte Doppeltimerbewegung wird in der DE-A1- 36 44 042.6 der Anmelderin näher erläutert. Dabei handelt es sich um eine oder mehrere kurzhubige Hub-/Senkbewegungen der Werkzeugelektrode relativ zum Werkstück, die im Dielektrikum wiederum relativ zu ersten Hub-/Senkbewegungen (einfachen Timerbewegungen) durchgeführt werden.

Im folgenden wird die Erfindung anhand von Ausführungsbeispielen im Zusammenhang mit den Zeichnungen ausführlicher erläutert.

Es zeigt:

Fig. 1: die Bahn einer Senkelektrode längs einer erfindungsgemäßen Rückzugsbahn nach Auftreten eines Kurzschlusses, wobei unterschiedliche Vektoren Verwendung finden.

Fig. 2a - 2d: die Verbindung gängiger Rückzugsbewegungen mit der Rückzugsbewegung "Punkt".

Fig. 3a - 3d: die Verbindung gängiger Rückzugsbewegungen mit der Rückzugsbewegung "Vektor".

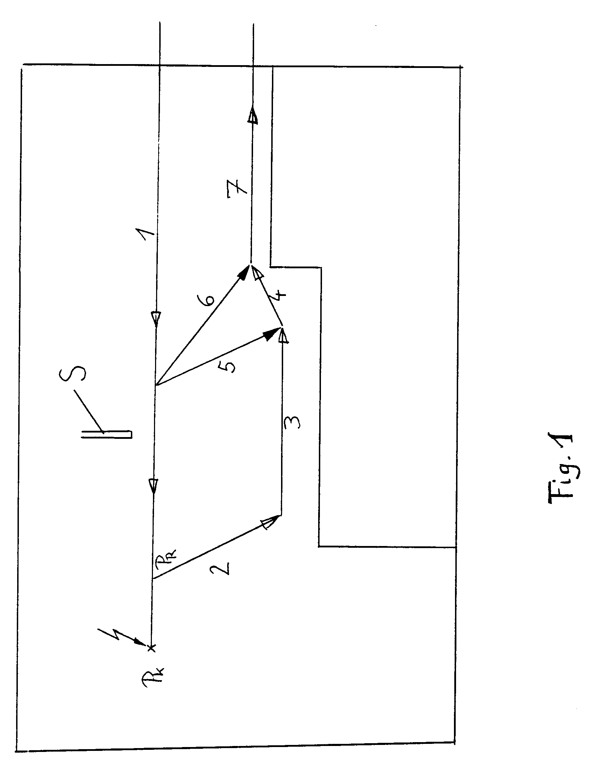

Fig. 1 zeigt die Bewegungsbahn einer Senkelektrode S längs einer Bahn 1 in einem Werkstück. Im Gegensatz zum planetären Erodieren wird die zu erodierende Form direkt durch die Bewegung der Senkelektrode S in der Bahn 1 erzeugt.

Diese Art des Erodierens ist insbesondere vorteilhaft bei Formteilen wie beispielsweise Dichtringen.

Dabei kann aber ein Kurzschluß auftreten, falls die Senkelektrode S direkt das Werkstück berührt.

Da die Senkelektrode S beim Erodiervorgang kleine Partikel aus dem Werkstück herauserodiert und sich diese Partikel weiterhin in dem Dielektrikum befinden, in dem sich der gesamte Erodiervorgang abspielt, ist

EP 0 342 698 B1

es aber auch möglich, daß sich diese Partikel zwischen Werkstück und Elektrode so ungünstig anordnen und an einer Stelle $P_k$ ein Kurzschluß auftritt, wobei der Widerstand im Dielektrikum gegen Null fällt. Um nun diesen Kurzschluß abbauen zu können, muß eine Rückzugsbewegung der Senkelektrode S erfolgen, die sich gemäß der Erfindung in mehrere Abschnitte aufteilen läßt.

Zunächst erfolgt der Rückzug der Senkelektrode S entlang einer kurzen Strecke längs der zuvor gefahrenene Bahn 1 zurück, um zu vermeiden, daß die in das Werkstück erodierte Rundung die Bewegung der Senkelektrode bei ihrer Rückzugsbewegung zum Abbau des Kurzschlusses behindert.

Diese Rundung entsteht dadurch, daß die Senkelektrode eine ihre eigene Form in das Werkstück erodiert. Es wird in diesem Werkstück daher eine Art Kante ausgebildet, die bei einer seitlichen Rückzugsbewegung der Senkelektrode S in jedem Fall verletzt würde. Bei der hohen Präzision der herzustellenden Teile ist dies in keinem Fall gewünscht.

Sollte der Kurzschluß am Punkte $P_R$ der Rückzugsbewegung noch nicht abgebaut sein, so schließt sich eine weitere Bewegung entlang einem ersten Teilstück (2) der Rückzugsbahn entlang eines in Länge und Richtung im Raum vorbestimmten Vektors an.

Dieser Vektor kann von dem Bedienungspersonal zuvor bestimmt werden, und unterliegt in seinen Anforderungen an Betrag und Richtung insbesondere der die Bewegung begrenzenden Umgebung des Werkstücks.

Wie bei allen Rückzugsbewegungen soll in vorteilhafter Weise der Kurzschluß so schnell wie möglich abgebaut werden; hierzu ist es erforderlich, daß die Senkelektrode S in kürzester Zeit von den Werkstückflächen entfernt wird.

Wird jedoch die weitere Rückzugsbewegung durch die Geometrie eines Hindernisses K, das im vorliegenden Fall ein Teil des Werkstückes ist, begrenzt, so ist es nicht möglich die Bewegung der Senkelektrode S in der Richtung des Vektors für das erste Teilstück 2 der Rückzugsbahn über den vordefinierten Betrag der Länge hinauszuführen; ansonsten würde möglicherweise wieder ein Kurzschluß auftreten.

Daher schließt sich bei noch vorliegendem Kurzschluß an der Spitze des Vektors für das erste Teilstück 2 der Rückzugsbahn eine Bewegung der Senkelektrode S entlang eines zweiten Teilstücks 3 der Rückzugsbahn an. Dieses Teilstück 3 verläuft parallel zur erodierten Bahn 1 und in entgegengesetzter Richtung zu der Richtung, die die Senkelektrode in der erodierten Bahn 1 beim Erodieren beschrieb.

Ist es nun aufgrund der Geometrie des Hindernisses K des Werkstückes erforderlich, daß der zuvor beschriebene Vektor 2 eine Änderung erfährt, so verläuft die weitere Bewegung der Senkelektrode S entlang eines dritten Teilstücks 4 der Rückzugsbahn, das durch die Spitzen der beiden vorbestimmten Vektoren 5 und 6 festgelegt wird.

Vektor 5 enspricht dabei nach Länge und Betrag dem Rückzugsbahnvektor 2, ist jedoch nur zu diesem parallel versetzt.

Eine derartige Übergangsbewegung kann sich insbesondere dann ergeben, wenn das Hindernis K des Werkstückes dies aufgrund seiner Geometrie, wie zum Beispiel der in Figur 1 dargestellten Kante des Körpers K, erforderlich macht.

Ist die Senkelektrode S am Ende des Vektors 6 angelangt und ist der Kurzschlußzustand immer noch nicht abgebaut, so erfolgt die weitere Bewegung der Senkelektrode S entlang eines vierten Teilstücks 7, das wieder parallel zur erodierten Bahn 1 verläuft.

Das Bedienungspersonal kann die Vektoren 2 (5) und 6 jeweils vor dem Erodiervorgang in jeweiliger Abhängigkeit von dem Hindernis K nach Betrag und Richtung bestimmen. Fehler sind bei dieser Bestimmung nahezu völlig auszuschließen, da durch die Vektoren jeweils Parallelogramme aufgespannt werden, deren Flächen in übersichtlicher Weise nicht mit dem Hindernis K in Berührung gebracht werden dürfen, um eine kurzschlußfreie Rückzugsbewegung der Senkelektrode zu gewährleisten.

Sollte sich die Richtung der zu erodierenden Bahn um einen Winkel von etwa 90° ändern, so erkennt das Bedienungspersonal sofort, bei gleichbleibendem Betrag und gleichbleibender Richtung des Vektors im Raum, ob ein Rückzugsvektor anders gewählt werden muß, damit eine mögliche Rückzugsbahn erhalten werden kann.

Dabei ist längs vorgegebener Wegstrecken der beim Erodieren zu durchlaufenden Bahn der das erste Teilstück 2 der jeweiligen Rückzugsbahn bestimmende Vektor in Bezug auf das absolute Koordinatensystem fix.

Erläuternd muß an dieser Stelle festgehalten werden, daß das weitere Bestehen des Kurzschlusses während der gesamten Rückzugsbewegungen ständig überprüft wird, d. h. nicht nur an den Stellen, an denen die Änderung der Bewegung erfolgt.

Ist nun der Kurzschluß im Punkt $P_k$ abgebaut, so wird die Senkelektrode S nicht wieder direkt auf die erodierte Bahn 1 zurückgeführt, sondern bewegt sich entlang der zuvor gefahrenen Rückzugsbahn von dem Punkt der Rückzugsbahn aus in Richtung auf den Punkt $P_R$ zurück, an dem sich die Senkelektrode S befand, als der Kurzschlußzustand aufgehoben wurde. Von dort aus bewegt sie sich ein kurzes Stück entlang der erodierten Bahn wieder zum Kurzschlußpunkt $P_k$ hin.

4

Würde man die Senkelektrode entlang der erodierten Bahn 1 zurückführen, so ergäben sich große Probleme mit den schon erodierten Partikeln. Diese sind nach dem Erodiervorgang in der erodierten Bahn 1 im Dielektrikum sedimentiert und nicht weggespült. Verläuft nun die Elektrode wieder auf der schon gefahrenen Bahn 1, so können diese Partikel durch Anlagerung an den Werkstückflächen deren Flächen verkratzen.

Dies wird bei einer Bewegung der Senkelektrode entlang der Rückzugsbahn zum Kurzschlußpunkt hin ausgeschlossen.

Bei komplizierten geometrischen Werkstücken kann es sich ebenfalls auch anbieten, mehrere Rückzugsbewegungen miteinander zu verbinden, um den schnellstmöglichen Kurzschlußabbau zu erzielen.

Um die möglichen Verbindungen näher zu erläutern, werden die momentan gängigsten Fluchtmethoden näher erläutert:

Rückzugsbewegung "Default":

Dies ist die übliche Rückzugsbewegung einer Senkelektrode entlang der zuvor erodierten Bahn und vom Kurzschlußpunkt $P_k$ weg.

Rückzugsbewegung "Punkt":

Hier wird zunächst ein Punkt bestimmt, wobei nach jedem Auslösen der Rückzugsbewegung von jedem Ort des Kurzschlusses aus eine lineare Bewegung auf diesen Punkt zu erfolgt.

Rückzugsbewegung "Vektor":

Bei dieser Methode ordnet man der Rückzugsbewegung einen inkrementalen Vektor zu; die weitere Bewegung parallel zur zuvor gefahrenen Bahn wurde für Figur 1 schon näher beschrieben.

Rückzugsbewegung "Planetär:

Diese Rückzugsbewegung eignet sich nur bei Systemen, bei denen planetär erodiert wird.

Hier wird zunächst ein Punkt meist auf der Achse eines zu erodierenden Zylinders oder ähnlichen Hohlkörpers festgelegt, sowie eine bestimmte Länge L als Abstand dieses Punktes vom Boden des Hohlkörpers. Tritt ein Kurzschluß auf, so erfolgt die Rückzugsbewegung automatisch in Richtung des zuvor festgelegten Punktes der Achse im Abstand L vom Boden des Hohlkörpers und dann, sollte der Kurzschluß bis dahin noch nicht abgebaut sein, längs der Achse aus dem Hohlkörper heraus.

Es bestehen nun vielerlei Möglichkeiten die einzelnen Rückzugsbewegungen miteinander zu verbinden. Selbstverständlich können die im folgenden beschriebenen Verbindungen auch wiederum untereinander miteinander verbunden werden.

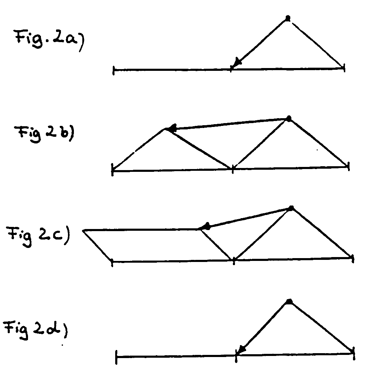

In den Figuren 2a, 2b, 2c, 2d sind die Verbindungen der einzelnen Rückzugsbewegungen mit der Rückzugsbewegung "Punkt" näher dargestellt.

Bei der Verbindung der Rückzugsbewegung "Punkt" mit der Rückzugsbewegung "Default" erfolgt eine lineare Bewegung zum Ende des letzten Rückzugspunktes mit welchem die Rückzugsbewegung "Default" begann (Fig. 2a).

Bei der Verbindung der Rückzugsbewegung "Punkt" mit einer weiteren Rückzugsbewegung "Punkt" erfolgt eine lineare Bewegung zum Punkt, der in der vorhergehenden Rückzugsbewegung zunächst vorbestimmt wurde (Fig 2b).

Bei der Verbindung der Rückzugsbewegung "Punkt" mit der Rückzugsbewegung "Vektor" erfolgt die lineare Rückzugsbewegung zu der Stelle hin, die durch das Ende des letzten Rückzugspunktes bestimmt ist, versetzt um den bestimmten Vektor (Fig 2c).

Bei der Verbindung der Rückzugsbewegung "Punkt" mit der Rückzugsbewegung "Planetär" erfolgt eine lineare Bewegung zum Ende des letzten Rückzugspunktes, dem die Rückzugsbewegung "Planetär" galt (Fig 2d).

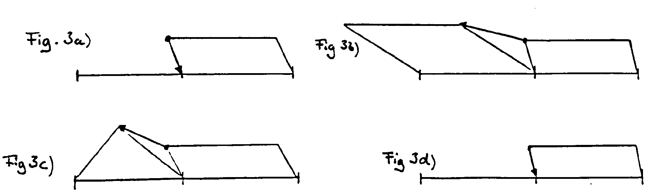

Die Figuren 3a, 3b, 3c und 3d zeigen die Verbindung der bekannten und zuvor erläuterten Rückzugsbewegungen mit der Rückzugsbewegung "Vektor".

Bei der Verbindung der Rückzugsbewegung "Vektor" mit der Rückzugsbewegung "Default" erfolgt eine lineare Bewegung zum Ende des letzten Rückzugspunktes, für welchen die Rückzugsbewegung "Default" galt (Fig. 3a).

Für die Verbindung der Rückzugsbewegung "Vektor" mit der Rückzugsbewegung "Punkt" erfolgt die lineare Bewegung zum in der letzten Rückzugsbewegung vorbestimmten Punkt hin (Fig. 3b).

Für die Verbindung der Rückzugsbewegung "Vektor" mit der Rückzugsbewegung "Vektor" erfolgt die lineare Bewegung zum in der letzten vorhergehenden Rückzugsbewegung bestimmten Punkt hin, versetzt um den Vektor (Fig. 3c).

Für die Verbindung der Rückzugsbewegung "Vektor" mit der Rückzugsbewegung "Planetär" erfolgt die lineare Bewegung zum Ende des letzten Rückzugspunktes für welchen die Rückzugsbewegung "Planetär" galt (Fig. 3d).

Gleichzeitig mit den Rückzugsbewegungen kann eine Timerbewegung mit diesen Rückzugsbewegungen gekoppelt sein.

Bei einem einfachen Timer wird in bekannter Weise in vorbestimmten zeitlichen Abständen die Senkelektrode S aus dem Werkstück herausgezogen und zwar um eine geringe Weglänge, damit die beim Erodiervorgang aufgetretenen Partikel weggespült werden können. Die Geschwindigkeit bei der Timerbewegung ist dabei wesentlich höher als die Geschwindigkeit der Senkelektrode S beim Rückzug.

Da die einfachen Timerbewegungen relativ kurz sind und daher der Abstand zwischen Werkstück und Senkelektrode S nur relativ gering und damit die Spülung der erodierten Partikel nur sehr schwach ist, mußte eine längere Rückzugsbewegung geschaffen werden. Diese wird durch einen sogenannten "Doppel-Timer" möglich, der eine wesentlich längere Wegstrecke durchläuft und dadurch den Abstand zwischen Werkstück und Senkelektrode S derart vergrößert, daß das Dielektrikum einwandfrei gespült werden kann. Die Art der Programmierung des DoppelTimers ermöglicht dabei die Ausführung und Timerbewegungen mit verschiedener Länge nach n ausgeführten Timern.

**Patentansprüche**

1. Verfahren zur gesteuerten Rückzugsbewegung einer Senkelektrode (S) bei einer Elektroerosionsmaschine, bei dem die Senkelektrode (S) bei vorhandenem Kurzschluß zunächst eine vorgegebene Weglänge längs der zuvor durchlaufenen Bahn von dem Kurzschlußpunkt zu einem Zwischenpunkt zurückbewegt wird, und bei dem die Senkelektrode (S) auf der vorgegebenen Rückzugsbahn von dem Zwischenpunkt wegbewegt wird, wenn bei Erreichen des Zwischenpunktes noch ein Kurzschluß vorhanden ist,
dadurch gekennzeichnet,
daß ein erstes Teilstück (2) der Rückzugsbahn durch einen in Betrag und Richtung fest definierten Vektor im Raum bestimmt wird, wobei bei noch vorhandenenem Kurzschluß an der Vektorspitze die weitere Bewegung (zweites Teilstück (3) der Rückzugsbahn) der Senkelektrode (S) parallel versetzt zur erodierten Bahn (1) und dabei in entgegengesetzter Richtung zu der Richtung, die die Senkelektrode (S) in der erodierten Bahn (1) beim Erodieren beschreibt geführt wird (antiparallele Bewegung).

2. Verfahren nach Anspruch 1,
dadurch gekennzeichnet,
daß längs vorgegebener Wegstrecken der beim Erodieren zu durchlaufenden Bahn der das erste Teilstück (2) der Rückzugsbahn bestimmende Vektor in Bezug auf ein absolutes Koordinatensystem fix ist.

3. Verfahren nach Anspruch 2,
dadurch gekennzeichnet,
daß die Rückzugsbahn aus wenigstens zwei nach Betrag und Richtung fest definierten Vektoren (2, 6) und dem zweiten Teilstück (3) besteht und zwar in Abhängigkeit von der Geometrie des Werkstücks.

4. Verfahren nach Anspruch 3,
dadurch gekennzeichnet,
daß am Ende der durch die Geometrie des Werkstücks begrenzten Bewegung längs des zweiten Teilstücks (3) sich eine Bahnbewegung längs des dritten Teilstücks (4) in Richtung der Vektorspitze eines weiteren, fest definierten Vektors (6) anschließt, wobei, wenn der Kurzschluß noch besteht, wenn die Senkelektrode (S) an dem Ort der Spitze des Vektors (6) angelangt ist, die weitere Bewegung der Senkelektrode (S) längs eines vierten Teilstücks (7) wieder parallel versetzt zur erodierten Bahn (1) und dabei in entgegengesetzter Richtung, zu der Richtung, die die Senkelektrode (S) in der erodierten Bahn (1) beim Erodieren beschreibt, weitergeführt wird.

5. Verfahren nach Anspruch 4,
dadurch gekennzeichnet,
daß die Senkelektrode (S) nach Aufhebung des Kurzschlusses dem Ort ($P_k$) an dem der Kurzschluß zuerst aufgetreten ist wieder zugeführt wird, und zwar auf der durchlaufenen zusammengesetzten Rückzugsbahn.

6. Verfahren zur gesteuerten Rückzugsbewegung einer Senkelektrode (S) bei einer Elektroerosionsmaschine, bei dem die Senkelektrode (S) bei vorhandenem Kurzschluß zunächst eine vorgegebene Weglänge längs der zuvor durchlaufenen Bahn von dem Kurzschlußpunkt zu einem Zwischenpunkt zurückbewegt wird, und bei dem die Senkelektrode (S) auf der vorgegebenen Rückzugsbahn von dem Zwischenpunkt wegbewegt wird, wenn bei Erreichen des Zwischenpunktes noch ein Kurzschluß vorhanden ist,
dadurch gekennzeichnet,
daß die Senkelektrode (S) längs der Rückzugsbahn mit wenigstens zwei direkt aneinander anschließenden Rückzugsbewegungen zurückbewegt wird,
wobei eine Rückzugsbewegung "Punkt" oder eine Rückzugsbewegung "Vektor" mit einer Rückzugsbewegung "Default", "Punkt", "Vektor" oder "Planetär" verbunden ist, und
Rückzugsbewegung "Default" die übliche Rückzugsbewegung einer Senkelektrode entlang der zuvor erodierten Bahn und vom Kurzschlußpunkt ($P_k$) weg bedeutet,
bei der Rückzugsbewegung "Punkt" zunächst ein Punkt bestimmt wird, wobei nach jedem Auslösen der Rückzugsbewegung von jedem Ort des Kurzschlusses aus eine lineare Bewegung auf diesen Punkt zu erfolgt,
bei der Rückzugsbewegung "Vektor" der Rückzugsbewegung ein inkrementaler Vektor zugeordnet wird und anschließend an diesen die weitere Bewegung parallel zur zuvor gefahrenen Erosionsbahn erfolgt,
bei der Rückzugsbewegung "Planetär" zunächst ein Punkt innerhalb eines zu erodierenden Hohlkörpers in einem Abstand bestimmter Länge L von dem Boden des Hohlkörpers festgelegt wird und die Rückzugsbewegung zu diesem Punkt hin und dann in axialer Richtung des Hohlkörpers erfolgt.

7. Verfahren nach einem der voranstehenden Ansprüche,
dadurch gekennzeichnet,
daß einer üblichen, einfachen Timerbewegung der Senkelektrode (S) entlang der jeweiligen Rückzugsbahn eine zusätzliche Doppeltimerbewegung überlagert ist.

8. Verfahren nach Anspruch 7,
dadurch gekennzeichnet,
daß die Dauer der Doppeltimerbewegung länger ist, als die der einfachen Timerbewegung.

## Claims

1. A method for the controlled retraction of a sinking electrode (S) in an electroerosion machine, in which, when a short circuit is present, the sinking electrode (S) is firstly retracted a predetermined distance along the path previously covered from the short circuit point to an intermediate point, and in which the sinking electrode (S) is moved away from the intermediate point on the predetermined retraction path if a short circuit is still present when it reaches the intermediate point,
characterised
in that a first section (2) of the retraction path is determined by a vector in the space which is fixedly defined with respect to absolute value and direction, the further movement (second section (3) of the retraction path) of the sinking electrode (S) being guided, if the short circuit is still present at the apex of the vector, so as to be transposed parallel to the eroded path (1) and in the opposite direction to the direction described by the sinking electrode (S) in the eroded path (1) during the erosion process (antiparallel movement).

2. A method according to claim 1,
characterised
in that along predetermined distances of the path to be covered during the erosion process, the vector determining the first section (2) of the retraction path is fixed in relation to an absolute system of coordinates.

3. A method according to claim 2,
characterised
in that the retraction path consists of at least two vectors (2, 6), fixedly defined according to absolute value and direction, and the second section (3), in dependence on the geometry of the workpiece.

4. A method according to claim 3,
characterised
in that a path movement along the third section (4) towards the vector apex of a further fixedly defined vector (6) follows the end of the movement, limited by the geometry of the workpiece, along the second section (3), wherein, if the short circuit is still present, if the sinking electrode (S) has arrived at the location of the apex of the vector (6), the further movement of the sinking electrode (S) along a fourth section (7) is continued, again transposed parallel to the eroded path (1) and in the opposite direction to the direction described by the sinking electrode (S) in the eroded path (1) during the erosion process.

5. A method according to claim 4,
characterised
in that after the short circuit has been cleared, the sinking electrode (S) is again conveyed to the location ($P_k$) at which the short circuit first occurred, namely on the combined retraction path which it covered.

6. A method for the controlled retraction of a sinking electrode (S) in an electroerosion machine, in which, when a short circuit is present, the sinking electrode (S) is firstly retracted a predetermined distance along the path previously covered from the short circuit point to an intermediate point, and in which the sinking electrode (S) is moved away from the intermediate point on the predermined retraction path if a short circuit is still present when it reaches the intermediate point,
characterised
in that the sinking electrode (S) is retracted along the retraction path with at least two retraction movements one following immediately after another,
wherein a "point" retraction movement or a "vector" retraction movement is combined with a "default", "point" or "planetary" retraction movement, and
the "default" retraction movement signifies the usual retraction movement of a sinking electrode along the previously eroded path and away from the short circuit point ($P_k$),
in the "point" retraction movement, a point is first determined, a linear movement towards this point taking place after each initiation of the retraction movement from each point of the short circuit,
in the "vector" retraction movement, an incremental vector is assigned to the retraction movement and following this, the further movement parallel to the previously travelled erosion path takes place,
in the "planetary" retraction movement, a point within a hollow body to be eroded is first established at a distance of a specific length L from the base of the hollow body, and the retraction movement towards this point and then in the axial direction of the hollow body takes place.

7. A method according to one of the preceding claims,
characterised
in that an additional double timer movement is superimposed on a standard single timer movement of the sinking electrode (S) along the respective retraction path.

8. A method according to claim 7,
characterised
in that the duration of the double timer movement is longer than that of the single timer movement.


## Revendications

1. Procédé de commande du mouvement de retrait d'une électrode de défonçage (S) dans une machine à électroérosion, dans lequel l'électrode de défonçage (S), en présence d'un court-circuit, est d'abord déplacée en arrière sur un chemin de longueur prédéterminée, le long du trajet qu'elle a déjà effectué, depuis le point où s'est produit le court-circuit jusqu'à un point intermédiaire, et dans lequel procédé l'électrode de défonçage (S) est éloignée, sur le trajet prédéterminé de retrait, du point intermédiaire si, quand le point intermédiaire est atteint, un court-circuit est encore présent, caractérisé en ce qu'une première fraction, ou morceau partiel (2) du trajet de retrait est déterminée spatialement par un vecteur bien défini en grandeur et en direction, de manière à ce que, si le court-circuit persiste toujours, sur l'extrémité du vecteur, la suite du déplacement (deuxième fraction (3) du trajet de retrait) de l'électrode de défonçage (S) est guidée parallèlement au trajet ou chemin d'érosion (1) et décalée par rapport à celui-ci et dans la direction opposée à la direction suivie, lors de l'érosion, par l'électrode de défonçage (S) dans le trajet d'érosion (1) (mouvement anti-parallèle).

2. Procédé selon la revendication 1, caractérisé en ce que le long de certains trajets prédéterminés du chemin à parcourir lors de l'érosion, le vecteur qui détermine la première fraction (2) du trajet de retrait est fixe par rapport à un système absolu de coordonnées.

3. Procédé selon la revendication 2, caractérisé en ce que le trajet de retrait se compose d'au moins deux vecteurs (2, 6) bien définis en grandeur et en direction, et de la deuxième fraction (3), et ceci, en fonction de la géométrie de la pièce à usiner.

4. Procédé selon la revendication 3, caractérisé en ce qu'un déplacement selon un trajet le long de la troisième fraction (4) et dans la direction de l'extrémité vectorielle d'un vecteur supplémentaire (6), bien défini, est effectué à la fin du déplacement, limité par la géométrie de la pièce à usiner, le long de la deuxième fraction (3), de manière à ce que, si l'on a encore le court-circuit, quand l'électrode de défonçage (S) arrive à la position de l'extrémité du vecteur (6), la suite du déplacement de l'électrode de défonçage (S) est ultérieurement réalisée le long d'une quatrième fraction (7), à nouveau parallèle au trajet (1) mais décalée par rapport à lui et dans la direction opposée à la direction suivie par l'électrode de défonçage (S), dans le trajet d'érosion (1), lors de l'érosion.

5. Procédé selon la revendication 4, caractérisé en ce que l'électrode de défonçage (S), après l'élimination du court-circuit, est de nouveau guidée au point ($P_k$) où le court-circuit s'est manifesté initialement, en suivant effectivement le trajet de retrait composé que l'électrode a parcouru.

6. Procédé de commande de mouvement de retrait d'une électrode de défonçage (S) dans une machine à électroérosion, dans lequel l'électrode de défonçage (S), en présence d'un court-circuit, est d'abord déplacée en arrière sur une longueur de chemin prédéterminée, le long du trajet qu'elle a déjà parcouru, à partir du point où s'est produit le court-circuit jusqu'à un point intermédiaire, et dans lequel l'électrode de défonçage (S) est éloignée, sur le chemin prédéterminé de retour, du point intermédiaire si, à son arrivée au point intermédiaire, un court-circuit est toujours présent, caractérisé en ce que:

– l'électrode de défonçage (S) est déplacée en arrière le long du trajet de retrait selon au moins deux déplacements de retrait dont l'un succède directement à l'autre,

– un déplacement de retrait "point" ou un déplacement de retrait "vecteur" est associé à un déplacement de retrait "implicite", "point", "vecteur" ou "planétaire", et

– un déplacement de retrait "implicite" signifie le mouvement normal de retrait d'une électrode de défonçage le long du trajet soumis précédemment à érosion, en partant du point ($P_k$) du court-circuit,

– lors d'un déplacement de retrait "point", un point est d'abord déterminé et, après chaque déclenchement du déplacement de retrait loin de chaque position de court-circuit, un déplacement linéaire vers ce point est réalisé,

– lors d'un déplacement de retrait "vecteur", le déplacement de retrait est associé à un vecteur incrémentiel et, en continuité avec ceci, le déplacement ultérieur se réalise parallèlement au trajet d'érosion précédemment parcouru,

– lors d'un déplacement de retrait "planétaire", d'abord un point est déterminé à l'intérieur d'un corps creux devant être soumis à érosion, à une distance de longueur L fixée de la base du corps creux, et le déplacement de retrait se réalise vers ce point et ensuite dans la direction axiale du corps creux.

7. Procédé selon l'une quelconque des revendications précédentes, caractérisé en ce qu'un mouvement à double cadence (timer) supplémentaire est superposé au mouvement simple cadencé (timer) normal de l'électrode de défonçage (S) le long du trajet de retrait en cours.

8. Procédé selon la revendication 7, caractérisé en ce que la durée du mouvement double cadencé est plus importante que celle du mouvement simple cadencé.

Fig.1

Fig. 2a)

Fig 2b)

Fig 2c)

Fig 2d)

Fig. 3a)

Fig 3b)

Fig 3c)

Fig 3d)